# FASCICULE DE BREVET EUROPEEN

(11) **EP 2 255 615 B1**
(45) Date de publication et mention de la délivrance du brevet: **30.03.2016**
(21) Numéro de dépôt: 10162714.9
(22) Date de dépôt: 12.05.2010
(51) Int. Cl.: A01J 25/11, A01J 25/00

(54) **Dispositif pour la préparation de fromage blanc à l'intérieur d'une faisselle**
Vorrichtung zur Herstellung von Quark oder Frischkäse im Innern eines Abtropfbehälters
Device for preparing cottage cheese inside a strainer

(30) Priorité: 13.05.2009 FR 0953161
(43) Date de publication de la demande: 01.12.2010
(73) Titulaire: Lagrange, 69390 Vourles (FR)
(72) Inventeur: Lagrange, Charles, 69004, Lyon (FR); Gidoin, Hervé, 69004, Lyon (FR)
(74) Mandataire: Verriest, Philippe

(56) Documents cités:
- DE-A1- 2 929 641
- FR-A- 2 376 803
- FR-A- 2 423 977

## Description

L'invention concerne un dispositif pour la préparation de fromage blanc, à l'intérieur d'une faisselle.

La préparation de la faisselle se déroule suivant les étapes suivantes.

Tout d'abord du fromage blanc, ainsi que de la présure, sont ajoutés à du lait entier. Cette préparation repose ensuite pendant 50 à 60 minutes, de manière à faire cailler le lait, afin qu'il ait la consistance d'un yaourt.

La préparation est alors composée de lait caillé, qui constitue le fromage blanc, et d'un liquide d'aspect jaunâtre appelé sérum ou petit-lait. Cette préparation est découpée puis est ensuite disposée à la louche dans une faisselle.

Une faisselle est un moule présentant des ouvertures permettant l'égouttage de la préparation. La faisselle est disposée à l'intérieur d'un récipient et permet de séparer le lait caillé, qui reste dans la faisselle et prend la forme de cette dernière, du sérum qui s'écoule dans le récipient.

La faisselle est maintenue à distance du fond du récipient. Cette distance peut être ajustée afin de faire tremper partiellement le lait caillé dans le sérum, de manière à ne pas obtenir un fromage blanc qui soit trop sec.

Le maintien de la faisselle à bonne distance du fond du récipient peut être difficile à réaliser, en particulier lorsque le fromage blanc est préparé de manière artisanale.

Les documents FR 2 423 977 décrit un dispositif comportant une faisselle, disposée à l'intérieur d'un récipient de collecte du sérum. Le dispositif comporte en outre des moyens permettant de maintenir la faisselle à une ou plusieurs distances prédéterminées par rapport au fond du récipient.

Un tel dispositif présente toutefois une structure complexe et est d'utilisation peu pratique. Or, dans le cas d'un dispositif destiné à être utilisé par un large public, il est particulièrement important que celui-ci soit peu cher et de mise en oeuvre aisée.

A cet effet, l'invention concerne un dispositif pour la préparation de fromage blanc, comportant un récipient à l'intérieur duquel est disposée une faisselle, apte à être déplacée verticalement en translation dans la récipient entre au moins une position haute d'égouttage et une position base de rangement, caractérisé en ce que la faisselle est apte à pivoter dans le récipient, le récipient étant équipé d'au moins une rampe coopérant avec au moins un organe suiveur de la faisselle, la rampe et l'organe suiveur étant agencés de telle sorte que la rotation de la faisselle à l'intérieur du récipient entraîne le déplacement vertical de la faisselle vis-à-vis du récipient, entre au moins une position haute d'égouttage et au moins une position basse de rangement.

De cette manière, lorsque l'on souhaite égoutter le lait caillé disposé dans la faisselle, l'utilisateur fait simplement pivoter cette dernière à l'intérieur du récipient afin de la déplacer verticalement vers le haut jusqu'à sa position d'égouttage. Lorsque la préparation du fromage blanc est terminée, l'utilisateur ramène la faisselle dans sa position basse d'origine, en faisant pivoter celle-ci dans le sens inverse.

Selon une caractéristique de l'invention, la faisselle et/ou le récipient sont équipés de moyens de maintien en position de la faisselle dans sa position haute et/ou dans sa position basse.

La position haute de la faisselle est ainsi sécurisée, de manière à éviter toute descente accidentelle de la faisselle, et donc du lait caillé, dans le sérum contenu dans le récipient.

Avantageusement, la rampe présente un évidement conçu pour loger l'organe suiveur en position haute de la faisselle.

Selon une première forme d'exécution, la rampe est formée par le bord supérieur du récipient.

Selon une seconde forme d'exécution, la rampe est formée sur la surface latérale interne ou sur le fond du récipient.

Selon une possibilité de l'invention, la faisselle comporte plusieurs éléments suiveurs, de préférence au moins trois éléments suiveurs, le récipient comportant plusieurs rampes coopérant chacune avec un organe suiveur.

La présente de plusieurs éléments suiveurs permet de maintenir la faisselle de manière stable dans le récipient.

Préférentiellement, les rampes sont formées par une rampe ondulée unique, comportant plusieurs zones en creux et en saillie.

L'utilisation du dispositif est encore simplifiée. En effet, les rampes étant disposées de manière continue les unes à la suite des autres, il est possible de pouvoir passer successivement d'une position basse à une position haute, puis à une nouvelle position basse, en faisant pivoter la faisselle dans un même sens de rotation.

Suivant une caractéristique de l'invention, l'organe suiveur est formé par un plot faisant saillie de la paroi latérale de la faisselle.

Avantageusement, la faisselle comporte une collerette supérieure, destinée à venir en appui contre le bord supérieur du récipient en position basse de la faisselle.

De toute façon, l'invention sera bien comprise à l'aide de la description qui suit, en référence au dessin schématique annexé représentant, à titre d'exemples non limitatifs, trois formes d'exécution de ce dispositif pour la préparation de fromage blanc.

Figures 1 à 6 illustrent une première forme de réalisation de l'invention, dans lesquelles :
Figure 1 est une vue de face d'une faisselle ;
Figure 2 est une vue de face d'un récipient ;
Figure 3 est une vue, en perspective et en coupe partielle, d'un dispositif selon l'invention dans lequel la faisselle est en position basse ;
Figure 4 est une vue de face du dispositif dans la position de la figure 3 ;
Figure 5 et 6 sont des vues, correspondant aux figures 3 et 4, en position haute de la faisselle.
Figure 7 et 8 sont des vues, correspondant aux figures 3 et 4, du dispositif équipé d'un couvercle en position de rangement ;
Figures 9 à 12 sont des vues, correspondant respectivement aux figures 3 à 6, d'une deuxième forme de réalisation de l'invention ;
Figures 13 à 16 sont des vues, correspondant respectivement aux figures 3 à 6, d'une troisième forme de réalisation de l'invention ;

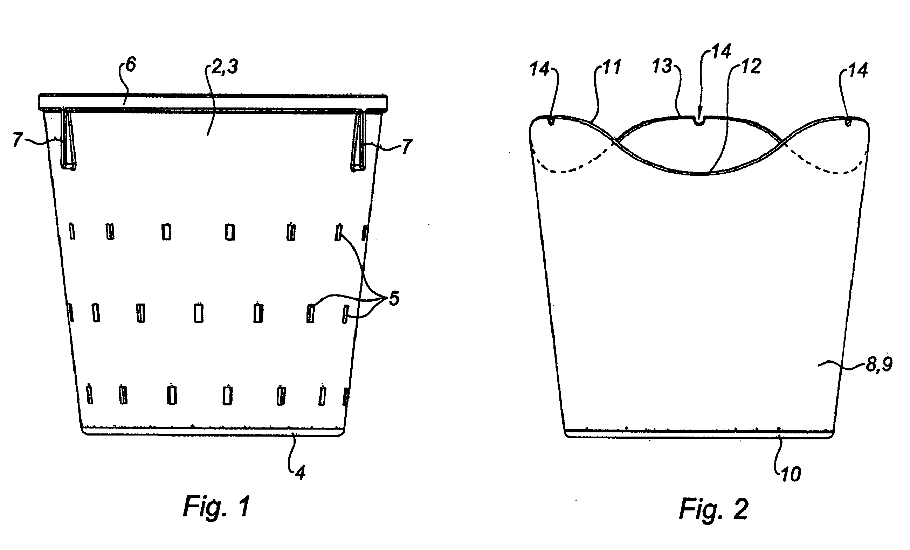

Comme cela est illustré aux figures 1 à 6, un dispositif 1 pour la préparation de fromage blanc selon l'invention comporte une faisselle 2 présentant une paroi latérale 3 et un fond 4 dans lesquelles sont ménagées des ouvertures 5 de forme générale rectangulaire, régulièrement réparties les unes par rapport aux autres.

La paroi latérale 3 présente une forme générale tronconique évasée vers le haut. Le bord supérieur de la paroi latérale 3 présente une collerette 6 s'étendant vers l'extérieur. Trois plots suiveurs 7 de forme allongée font saillie de la paroi latérale 3, vers l'extérieur, chaque plot 7 s'étendant sensiblement verticalement vers le bas depuis la collerette 6. La face externe des plots 7 s'étend sensiblement dans le prolongement du bord externe de la collerette 6, de sorte que, compte tenu de la forme générale tronconique de la paroi latérale 3, chaque plot 7 présente, en vue de côté, une forme générale triangulaire ou trapézoïdale.

Les plots 7 sont espacés angulairement d'un angle de 120°, de manière à ce qu'ils soient régulièrement répartis le long de la paroi latérale 3.

Le dispositif 1 comporte en outre un récipient 8 illustré à la figure 2, présentant également une paroi latérale 9 de forme générale tronconique et un fond 10. Les dimensions du récipient 8 sont ajustées de manière à pouvoir y loger la faisselle 2.

Le bord supérieur du récipient 7 forme une rampe 11 continue présentant une forme ondulée et définissant trois zones concaves arrondies en creux 12, séparées par trois zones convexes arrondies en saillie 13 (figure 2).

Des logements 14 sont ménagés au niveau de chaque sommet 13 de la rampe 11.

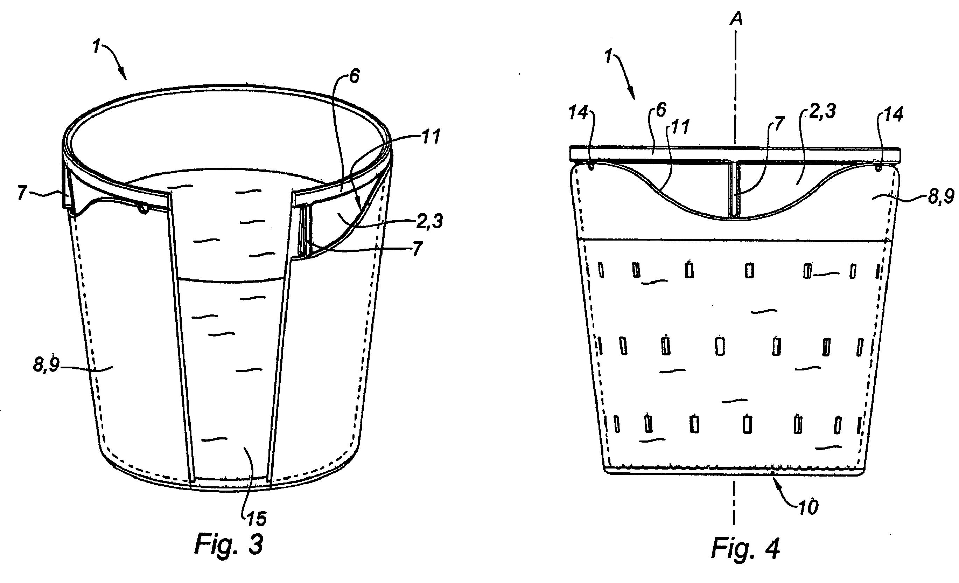

Comme cela est illustré aux figures 3 à 6, la faisselle 2 est disposée dans le récipient 8, l'extrémité inférieure des plots 7 reposant sur la rampe 11.

Lorsque les plots 7 prennent appui sur les zones creuses 12 de la rampe 11, la paroi de fond 4 de la faisselle 2 est alors disposée à proximité de la paroi de fond 10 du récipient 8 et la collerette 6 prend appui sur les sommets 13 de la rampe 11.

La faisselle 2 est alors en position basse et l'encombrement du dispositif 1 pour la préparation de fromage blanc est réduit. Cette position, illustrée aux figures 3 et 4 est la position basse de la faisselle 2.

Lors de l'utilisation du dispositif selon l'invention, l'utilisateur dispose du lait caillé 15 dans la faisselle 2 à l'aide d'une louche, comme expliqué précédemment. Il est alors nécessaire de séparer le lait caillé 15 du sérum 16.

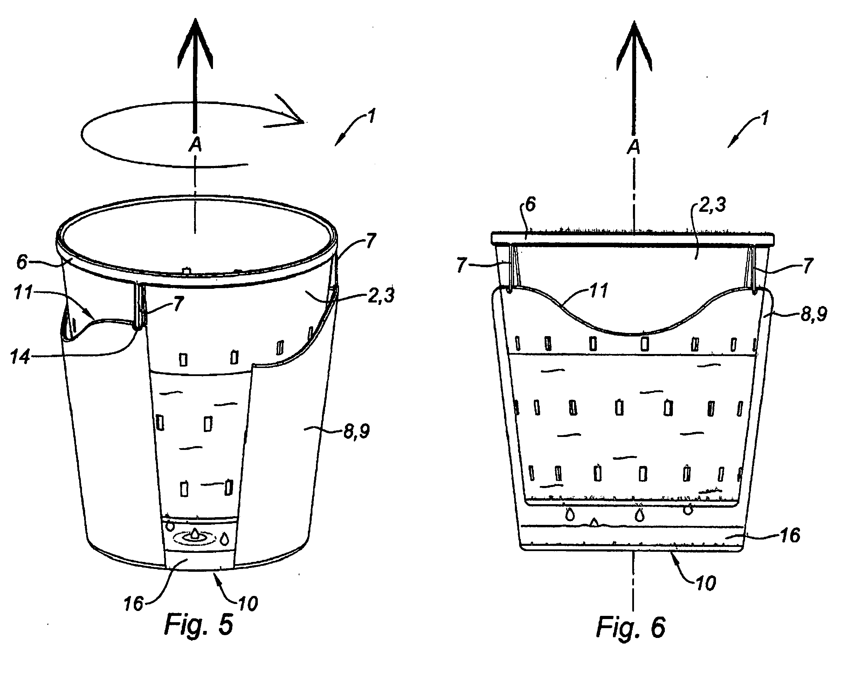

Pour cela, comme cela est illustré aux figures 5 et 6, l'utilisateur fait pivoter la faisselle 2 à l'intérieur du récipient 8, autour de l'axe vertical central A, de sorte que chaque plot 7 se déplace de la zone en creux 12 vers le sommet 13, au niveau desquels il s'engage dans un logement 14.

La faisselle 2 est alors maintenue en position haute, de sorte que le fond 4 de la faisselle 2 est situé à distance du fond 10 du récipient 8.

Les dimensions de la rampe 11 sont ajustées afin de faire tremper ou non une partie du lait caillé 15 dans le sérum 16.

Le retour à une position basse de la faisselle 2 peut être réalisé en soulevant légèrement cette dernière, de manière à ce que les plots 7 sortent des logements 14, et en la faisant pivoter dans un sens ou dans l'autre, jusqu'à ce que les plots 7 soient à nouveau en appui dans le fond des creux 12 de la rampe 11.

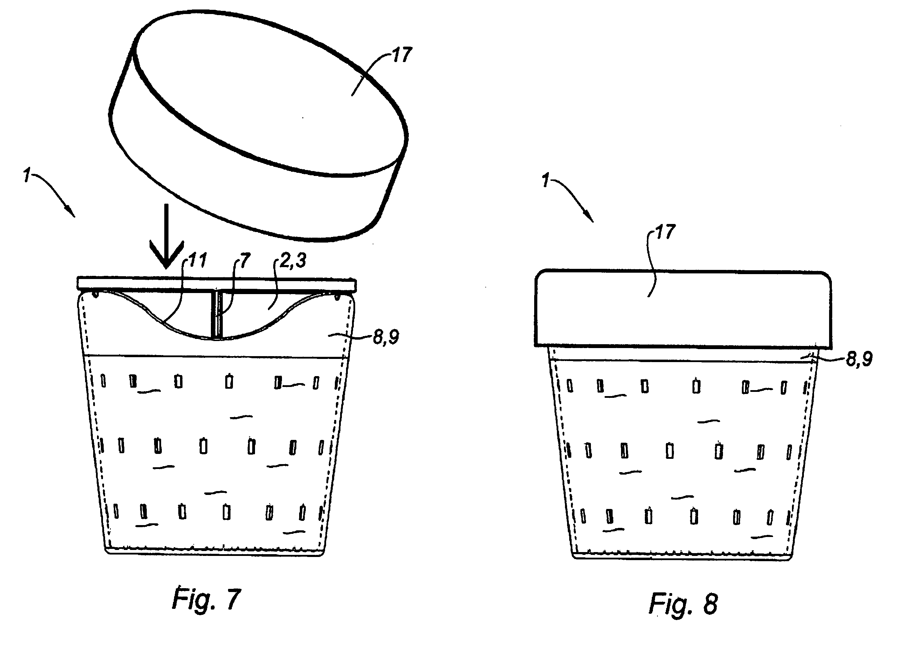

Comme cela est illustré aux figures 7 et 8, la faisselle 2 et le récipient 8 peuvent être recouverts par un couvercle 17 en position de rangement, c'est-à-dire en position basse de la faisselle 2.

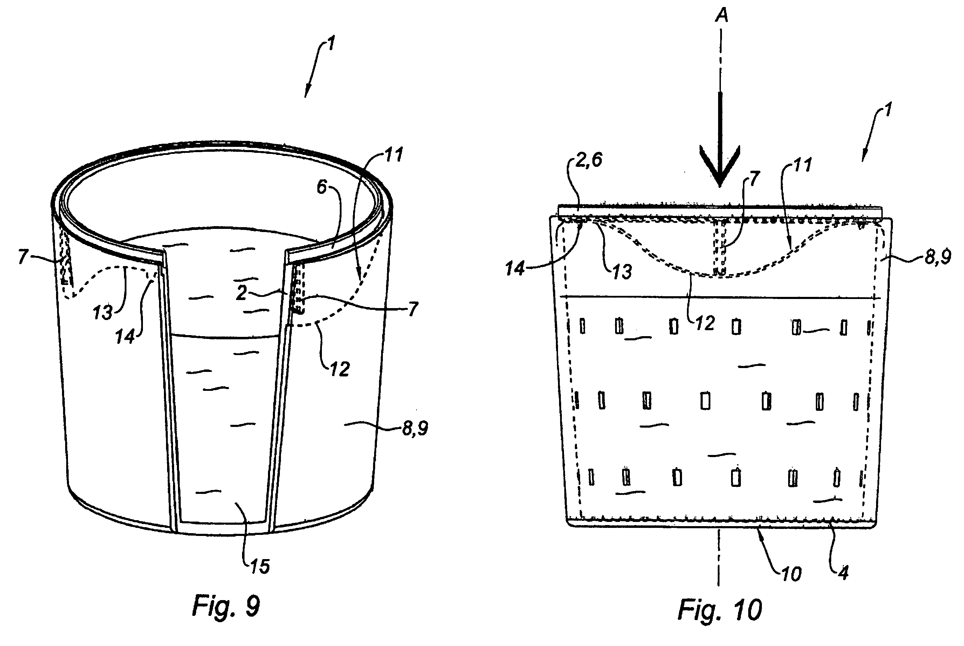

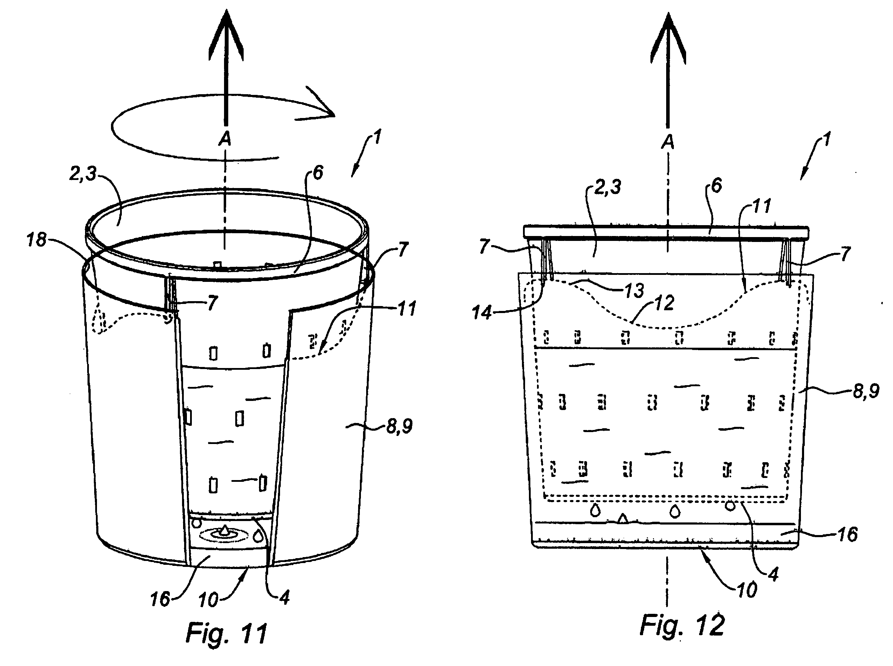

Une deuxième forme de réalisation est représentée aux figures 9 à 12.

Afin de faciliter la compréhension, les éléments présentant la même fonction que précédemment ont été désignés par les mêmes références.

Dans cette forme de réalisation, la rampe 11 est ménagée dans la surface interne de la paroi latérale 9 du récipient 8. Le bord supérieur 18 est alors contenu dans un plan sensiblement horizontal.

La forme de la rampe 11 et des plots 7 est similaire à celle décrite précédemment, le fonctionnement du dispositif restant inchangé.

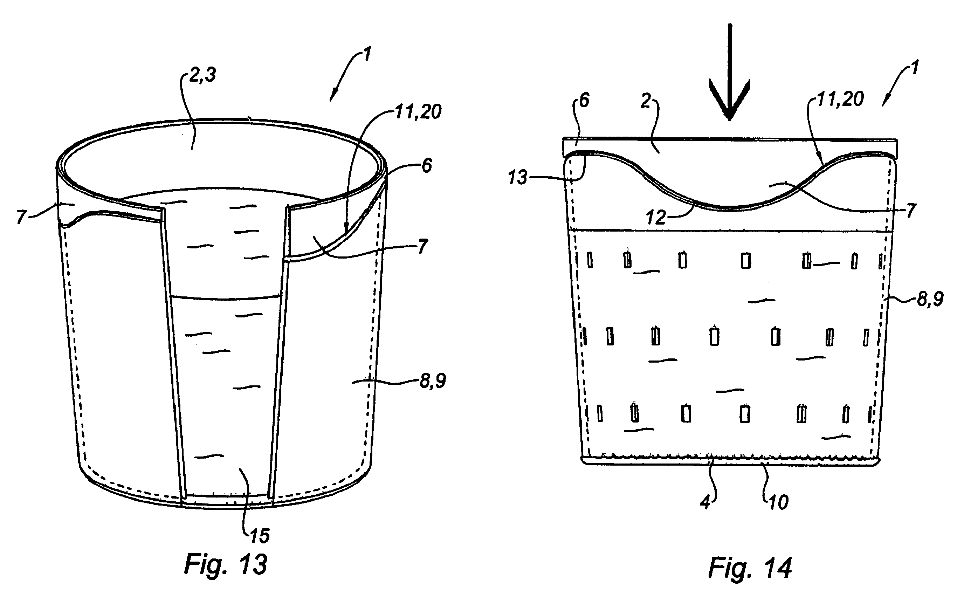

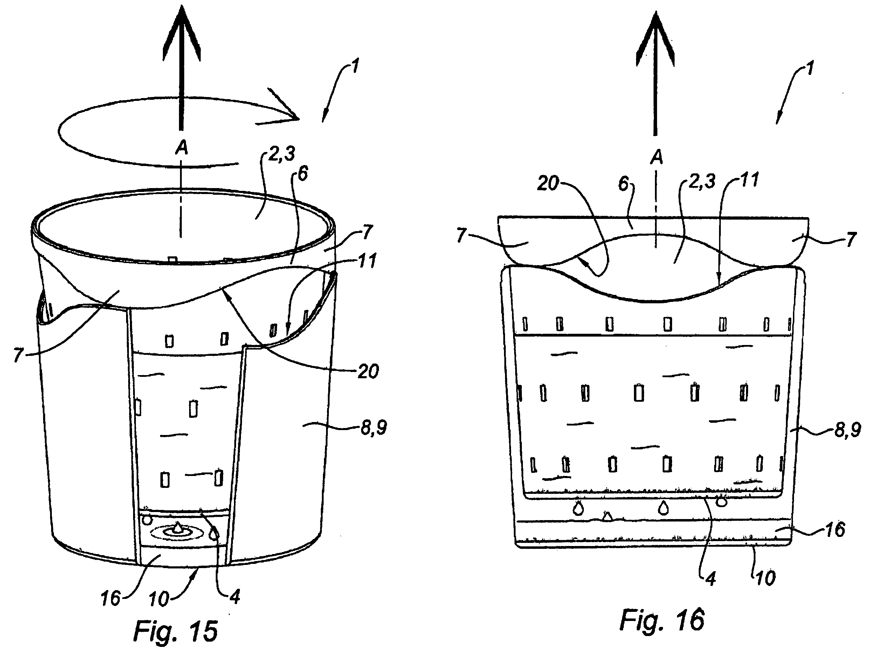

Une troisième forme de réalisation est représentée aux figures 13 à 16.

Cette forme de réalisation est similaire à celle représentée aux figures 1 à 8, hormis le fait que les plots 7 présentent des formes complémentaires de celles des zones de creux 12 du récipient 8. La collerette 6 et les plots 7 forment alors une rampe 20 de forme complémentaire à la rampe 11 du récipient 8. En outre, les sommets 13 de la rampe 11 ne sont plus pourvus de logements 14.

Le fonctionnement du dispositif selon cette forme de réalisation de l'invention reste inchangé par rapport à celui décrit précédemment.

Bien entendu, des plots 7 similaires à ceux des figures 13 à 16 pourraient également être utilisés dans la forme de réalisation des figures 9 à 12.

Comme il va de soi, l'invention ne se limite pas eux seules formes d'exécution de ce dispositif pour la préparation de fromage blanc, décrites ci-dessus à titre d'exemples, mais elle embrasse au contraire toutes les variantes.

## Revendications

1. Dispositif (1) pour la préparation de fromage blanc, comportant un récipient (8) à l'intérieur duquel est disposée une faisselle (2) apte à être déplacée verticalement en translation dans le récipient entre au moins une position haute d'égouttage et une position basse de rangement, **caractérisé en ce que** la faisselle (2) est apte à pivoter dans le récipient (8), le récipient (8) étant équipé d'au moins une rampe (11) coopérant avec au moins un organe suiveur (7) de la faisselle (2), la rampe (11) et l'organe suiveur (7) étant agencés de telle sorte que la rotation de la faisselle (2) à l'intérieur du récipient (8) entraîne le déplacement vertical de la faisselle (2) vis-à-vis du récipient (8), entre au moins une position haute d'égouttage et au moins une position basse de rangement.

2. Dispositif (1) selon la revendication 1, **caractérisé en ce que** la faisselle (2) et/ou le récipient (8) sont équipés de moyens de maintien en position (14) de la faisselle (2) dans sa position haute et/ou dans sa position basse.

3. Dispositif (1) selon la revendication 2, **caractérisé en ce que** la rampe (11) présente un évidement (14) conçu pour loger l'organe suiveur (7) en position haute de la faisselle.

4. Dispositif (1) selon l'une des revendications 1 à 3, **caractérisé en ce que** la rampe (11) est formée par le bord supérieur du récipient (8).

5. Dispositif (1) selon l'une des revendications 1 à 3, **caractérisé en ce que** la rampe (11) est formée sur la surface latérale (9) interne ou sur le fond (10) du récipient (8).

6. Dispositif (1) selon l'une des revendications 1 à 5, **caractérisé en ce que** la faisselle (2) comporte plusieurs éléments suiveurs (7), de préférence au moins trois éléments suiveurs (7), le récipient comportant plusieurs rampes (11) coopérant chacune avec un organe suiveur (7).

7. Dispositif (1) selon la revendication 6, **caractérisé en ce que** les rampes sont formées par une rampe ondulée unique (11), comportant plusieurs zones en creux (12) et en saillie (13).

8. Dispositif (1) selon l'une des revendications 1 à 7, **caractérisé en ce que** l'organe suiveur est formé par un plot (7) faisant saillie de la paroi latérale (3) de la faisselle (2).

9. Dispositif (1) selon l'une des revendications 1 à 8, **caractérisé en ce que** la faisselle (2) comporte une collerette supérieure (6), destinée à venir en appui contre le bord supérieur du récipient (8) en position basse de la faisselle (2).

## Patentansprüche

1. Vorrichtung (1) zur Zubereitung von Quark, die einen Behälter (8) umfasst, in dessen Innerem ein Abtropfbehälter (2) angeordnet ist, der geeignet ist, um vertikal in Verschiebung in dem Behälter zwischen mindestens einer oberen Abtropfstellung und einer unteren Aufbewahrungsposition verlagert zu werden, **dadurch gekennzeichnet, dass** der Abtropfbehälter (2) geeignet ist, in dem Behälter (8) zu schwenken, wobei der Behälter (8) mit mindestens einer Rampe (11) ausgestattet ist, die mit mindestens einem Folgeorgan (7) des Abtropfbehälters (2) zusammenwirkt, wobei die Rampe (11) und das Folgeorgan (7) derart eingerichtet sind, dass die Drehung des Abtropfbehälters (2) im Inneren des Behälters (8) eine vertikale Verlagerung des Abtropfbehälters (2) in Bezug zu dem Behälter (8) zwischen mindestens einer oberen Abtropfstellung und mindestens einer unteren Aufbewahrungsposition bewirkt.

2. Vorrichtung (1) nach Anspruch 1, **dadurch gekennzeichnet, dass** der Abtropfbehälter (2) und/oder der Behälter (8) mit Mitteln zum Halten in Position (14) des Abtropfbehälters (2) in seiner Hochstellung und/oder seiner Tiefstellung ausgestattet sind.

3. Vorrichtung (1) nach Anspruch 2, **dadurch gekennzeichnet, dass** die Rampe (11) eine Aussparung (14) aufweist, die ausgelegt ist, um das Folgeorgan (7) in Hochstellung des Abtropfbehälters aufzunehmen.

4. Vorrichtung (1) nach einem der Ansprüche 1 bis 3, **dadurch gekennzeichnet, dass** die Rampe (11) durch den oberen Rand des Behälters (8) ausgebildet ist.

5. Vorrichtung (1) nach einem der Ansprüche 1 bis 3, **dadurch gekennzeichnet, dass** die Rampe (11) auf der inneren seitlichen Oberfläche (9) oder auf dem Boden (10) des Behälters (8) ausgebildet ist.

6. Vorrichtung (1) nach einem der Ansprüche 1 bis 5, **dadurch gekennzeichnet, dass** der Abtropfbehälter (2) mehrere Folgeelemente (7), vorzugsweise mindestens drei Folgeelemente (7) umfasst, wobei der Behälter mehrere Rampen (11), die jeweils mit einem Folgeorgan (7) zusammenwirken, umfasst.

7. Vorrichtung (1) nach Anspruch 6, **dadurch gekennzeichnet, dass** die Rampe durch eine einzige wellige Rampe (11), die mehrere vertiefte Zonen (12) und vorstehende Zonen (13) umfasst, ausgebildet ist.

8. Vorrichtung (1) nach einem der Ansprüche 1 bis 7, **dadurch gekennzeichnet, dass** das Folgeorgan durch einen Klotz (7) ausgebildet ist, der von der Seitenwand (3) des Abtropfbehälters (2) vorsteht.

9. Vorrichtung (1) nach einem der Ansprüche 1 bis 8, **dadurch gekennzeichnet, dass** der Abtropfbehälter (2) einen oberen Kragen (6) umfasst, der dazu bestimmt ist, gegen den oberen Rand des Behälters (8) in Tiefstellung des Abtropfbehälters (2) zum Aufliegen zukommen.

## Claims

1. A device (1) for preparing cottage cheese, including a container (8) inside which is disposed a cheese strainer (2) able to be displaced vertically in translation in the container between at least one upper draining position and one lower storage position, **characterized in that** the cheese strainer (2) is able to pivot in the container (8), the container (8) being equipped with at least one ramp (11) cooperating with at least one follower member (7) of the cheese strainer (2), the ramp (11) and the follower member (7) being arranged such that the rotation of the cheese strainer (2) inside the container (8) causes the vertical displacement of the cheese strainer (2) with respect to the container (8), between at least one upper draining position and at least one lower storage position.

2. The device (1) according to claim 1, **characterized in that** the cheese strainer (2) and/or the container (8) are equipped with means for holding in position (14) the cheese strainer (2) in its upper position and/or in its lower position.

3. The device (1) according to claim 2, **characterized in that** the ramp (11) has a recess (14) designed to house the follower member (7) in the upper position of the cheese strainer.

4. The device (1) according to any of claims 1 to 3, **characterized in that** the ramp (11) is formed by the upper edge of the container (8).

5. The device (1) according to any of claims 1 to 3, **characterized in that** the ramp (11) is formed on the inner lateral surface (9) or on the bottom (10) of the container (8).

6. The device (1) according to any of claims 1 to 5, **characterized in that** the cheese strainer (2) includes several follower elements (7), preferably at least three follower elements (7), the container including several ramps (11) each cooperating with a follower member (7).

7. The device (1) according to claim 6, **characterized in that** the ramps are formed by a single corrugated ramp (11), including several hollow (12) protruding (13) areas.

8. The device (1) according to any of claims 1 to 7, **characterized in that** the follower member is formed by a stud (7) protruding from the lateral wall (3) of the cheese strainer (2).

9. The device (1) according to any of claims 1 to 8, **characterized in that** the cheese strainer (2) includes an upper collar (6), intended to bear against the upper edge of the container (8) in the lower position of the cheese strainer (2).
